Europäisches Patentamt

European Patent Office

Office européen des brevets

(11) Numéro de publication: **0 384 847**
**A1**

# (12) DEMANDE DE BREVET EUROPEEN

(21) Numéro de dépôt: 90400504.8

(22) Date de dépôt: 23.02.90

(51) Int. Cl.⁵: **H04L 12/42, H04L 12/40**

(30) Priorité: 23.02.89 FR 8902364

(43) Date de publication de la demande:
**29.08.90 Bulletin 90/35**

(84) Etats contractants désignés:
**AT BE CH DE ES GB IT LI NL SE**

(71) Demandeur: **JS TELECOM**
**36-38, rue de la Princesse**
**F-78430 Louveciennes(FR)**

(72) Inventeur: **Picandet, Jean A.**
**12, rue du Docteur Paquelin**
**F-75020 Paris(FR)**

(74) Mandataire: **Joly, Jean-Jacques et al**
**CABINET BEAU DE LOMENIE 55, rue**
**d'Amsterdam**
**F-75008 Paris(FR)**

(54) **Procédé et dispositif d'accès à un réseau de communication étendu.**

(57) Des stations (S1, ..., Sn, ..., Sp), auxquelles sont rattachés des terminaux de transmission de données (T1-1 à T1-$n_1$, ..., Tn-1 à Tn-$n_n$, ..., Tp-1 à Tp-$n_p$), sont reliées par des liaisons (MIC1-2, ..., MIC(n-1)-n, MICn-(n+1), ..., MICp-1) qui définissent au moins une boucle virtuelle formant au moins un canal de communication passant par toutes les stations et véhiculant des trames qui transportent au moins un jeton d'accès, de la signalisation et des données. Chaque station comporte un bus local propre (BL1, ..., BLn, ..., BLp) auquel l'accès en écriture par les terminaux de transmission de données est régi par un protocole de contention, l'accès d'un terminal en émission sur le canal de communication étant réalisé via le bus local ; des moyens pour capter le jeton d'accès en émission sur le canal de communication en réponse à une demande d'accès provenant d'un ou plusieurs terminaux rattachés à la station, et des moyens pour ré-émettre le jeton d'accès sur le canal de communication après que le ou les terminaux demandeurs aient émis successivement leurs messages respectifs via le bus local.

FIG. 1

## Procédé et dispositif d'accès à un réseau de communication étendu

La présente invention concerne un réseau de communication pour la transmission de trames contenant des informations de données ou de signalisation, constitué d'un ensemble de liaisons reliant des terminaux de transmission de données et conférant au réseau une topologie quelconque, chaque liaison portant un ou plusieurs canaux de signalisation et de données. L'invention vise plus particulièrement un protocole d'accès en émission sur ce réseau qui en optimise l'utilisation tout en évitant les collisions entre terminaux.

Il est connu que plusieurs terminaux de transmission de données raccordés à un réseau unique peuvent parfois chercher à émettre simultanément sur celui-ci. Différents procédés ont été proposés pour résoudre ce problème.

Un premier procédé connu consiste à utiliser un protocole d'accès à un bus du type CSMA/CD (initiales des termes anglais Carrier Sense Multiple Access/Collision Detection). Selon ce protocole, le terminal cherchant à émettre s'assure d'abord que le bus est libre par détection de l'état repos de celui-ci. Compte-tenu des temps de propagation sur le réseau, il peut toutefois se produire des collisions entre des données émises quasi-simultanément par des terminaux pour lesquels le réseau est localement apparu comme libre. Une procédure permet, dans ce cas, de réinitialiser les transmissions après une temporisation variable selon l'émetteur, évitant une nouvelle collision.

Ce procédé est bien adapté aux réseaux locaux sur lesquels les données sont transmises sous forme de trames asynchrones.

En revanche, il ne permet pas la transmision de données synchrones, en particulier la transmission de la parole, sur le même réseau. De plus, lorsque la longueur de celui-ci augmente, les temps de transmission deviennent importants, les risques de collision se multiplient et le rendement de la transmission diminue. Ainsi, pour une liaison capable théoriquement d'un débit de 10 Mbits/s, un débit maximum de seulement 5 Mbits/s est atteint en pratique. De ce fait, la longueur de la liaison est généralement limitée à quelques kilomètres. De même, dans le cas où le nombre de messages à émettre se met à croître, la probabilité de collision augmente, ce qui diminue l'efficacité du système.

Un deuxième procédé connu consiste à faire circuler, sur un réseau configuré en boucle, un jeton qui accorde le droit d'émettre au terminal de transmission qui le capte.

Il est alors possible de faire cohabiter, sur le même réseau, la transmission de données sous forme de paquets asynchrones et la transmission de données synchrones de parole, éventuellement avec allocation dynamique des voies temporelles de chaque trame en mode paquet (données) ou en mode circuit (parole).

Les performances sont peu affectées par les temps de propagation, ce qui permet de gérer des réseaux très étendus. Toutefois, dans le cas de réseaux de grande longueur, il est nécessaire de prévoir des interfaces de raccordement coûteuses entre le réseau et les terminaux de transmission de données.

Aussi, la présente invention a pour but de fournir un procédé et un dispositif d'accès à un réseau de communication reliant plusieurs terminaux de transmission de données synchrones ou asynchrones, et évitant les inconvénients précités des réseaux utilisant un protocole de type CSMA/CD ou de type à jeton. En particulier, l'invention a pour but de fournir un procédé et un dispositif d'accès à un réseau offrant la possibilité de transmettre à la fois des données asynchrones, paquets, ou signalisation, et des données synchrones sur une distance étendue sans demander d'interface de raccordement coûteuse au niveau de chaque terminal.

Ce but est atteint grâce à un procédé d'accès à un réseau de communication étendu du type comportant des stations auxquelles sont rattachés des terminaux de transmission de données et qui sont reliées par des liaisons selon une topologie quelconque, les liaisons véhiculant au moins un premier jeton, ou jeton d'accès, qui, lorsqu'il est capté par une station, autorise un terminal rattaché à cette station à accéder en émission sur une liaison à laquelle la station est raccordée, procédé selon lequel, conformément à l'invention,

- les liaisons définissent au moins une boucle virtuelle formant au moins un canal de communication passant par toutes les stations et véhiculant des trames qui transportent au moins un jeton, de la signalisation et des données,

- les terminaux rattachés à une station qui a capté le jeton d'accès au canal de communication peuvent accéder à celui-ci par l'intermédiaire d'un bus local commun propre à la station sur lequel l'accès en écriture par les terminaux est régi par un protocole à contention, et

- la station ayant capté le jeton d'accès en émission sur le canal de communication en réponse à une demande d'accès provenant d'un ou plusieurs terminaux rattachés à la station, ré-émet le jeton d'accès sur le canal de communication après que le ou les terminaux demandeurs aient émis successivement leurs messages respectifs via le bus local.

Par protocole à contention régissant l'accès en écriture sur le bus local, on entend ici un protocole de type CSMA/CA Access/Collision/Avoidance), CSMA/CR (Carrier Sense Multiple Access/Collision Resolution) ou CSMA/CD (Carrier Sense Multiple Access/Collision Detection), ou un protocole analogue.

Ainsi, l'invention combine le procédé à jeton, pour l'attribution du canal de communication à une station pour émission, et un procédé de type CSMA ou analogue pour résoudre les problèmes de contention localement au niveau de chaque station.

Par cette combinaison, la solution proposée cumule les avantages des deux procédés tout en évitant les inconvénients de l'un et de l'autre. Le réseau peut être très étendu avec un coût de raccordement, ramené à chaque terminal de transmission de données, relativement bas. En outre, la possibilité d'acheminer des canaux synchrones en plus des trames de données asynchrones permet de faire cohabiter des terminaux de transmission de données autres que de la parole avec des terminaux de traitement de la parole.

Dans chaque station autre que celle ayant capté le jeton d'accès au canal de communication, la signalisation et/ou les données synchrones ou asynchrones circulant sur celui-ci sont dérivées sur le bus local pour être accessibles en lecture par les terminaux rattachés à la station.

Par contre, dans la station ayant capté le jeton d'accès au canal de communication, la boucle formant celui-ci est ouverte en ré-émission des données sur le canal. La fermeture de la boucle dans cette station est effectuée en réponse à la réception d'un deuxième jeton, ou jeton de rebouclage, qui est émis sur le canal de communication en fin d'émission sur celui-ci par la station.

Le jeton de rebouclage peut être émis par la station qui vient de cesser d'émettre, immédiatement derrière la ré-émission du jeton d'accès. De la sorte, si le jeton d'accès est capté par une nouvelle station saisie d'une requête d'accès en émission sur le canal de communication, le jeton de rebouclage se retrouve en tête lorsqu'il parvient à la station qui vient de cesser d'émettre, après avoir parcouru la boucle formant le canal de communication.

En variante, le jeton de rebouclage pourrait être émis par une station située en aval de celle qui vient de cesser d'émettre, par exemple par la nouvelle station qui capte le jeton d'accès.

Les liaisons reliant les stations entre elles peuvent être réalisées pour définir plusieurs boucles virtuelles formant plusieurs canaux de communication passant par toutes les stations et ayant chacun un jeton d'accès en émission. Les boucles virtuelles formant les différents canaux peuvent avoir des topologies différentes, tout en passant par toutes les stations.

Le mode de transmission peut être asynchrone, par exemple A.T.M. (Asynchronous Transfer Mode) ou tout autre, ou synchrone, par exemple véhiculant des trames de type MIC (Modulation par Impulsions Codées) ou de type FDDI (Fiber Distributed Digital Interface). A titre d'exemple, chaque liaison peut porter 4 canaux synchrones MIC bidirectionnels, à 2048 kb/s chacun, acheminant des informations de synchronisation et des données.

Le jeton d'accès à un canal n'est pas nécessairement transmis sur celui-ci. Ainsi, les jetons d'accès aux différents canaux pourront être transmis sur un canal unique ou répartis sur un nombre limité de canaux.

De même, la signalisation relative aux différents canaux peut être transmise sur un canal unique ou sur un nombre limité de canaux.

Lorsque la signalisation et les données sont transmises sur des canaux distincts, le canal de signalisation véhicule un troisième jeton qui, lorsqu'il est capté par une station, autorise celle-ci à accéder au canal de signalisation en émission et qui est distinct du jeton d'accès véhiculé par le canal de données.

Enfin, toujours dans le cas où les liaisons entre stations supportent une pluralité de canaux de communication, un brassage peut être effectué dans chaque station, entre les canaux de communication et plusieurs canaux portés par le bus local.

Les débits sur le ou chaque canal de communication et sur les bus locaux peuvent être différents. Dans ce cas, un changement de vitesse de modulation est effectué entre le ou chaque canal de communication passant par une station et le bus local de celle-ci.

De même, un changement de vitesse de modulation peut être réalisé dans chaque station entre les terminaux de transmission de données et le bus local, sous forme d'un multiplexage, ou démultiplexage, temporel, allant de la sortie d'émission des terminaux vers le bus local et d'un démultiplexage, ou multiplexage, temporel allant du bus local vers l'entrée de réception des terminaux.

L'invention a aussi pour objet de fournir un dispositif permettant la mise en oeuvre du procédé ci-dessus.

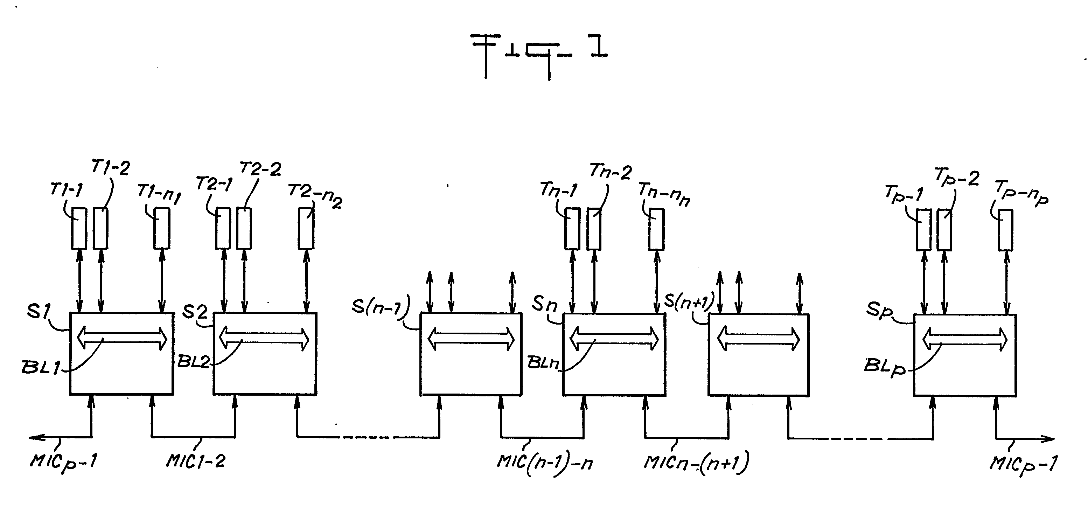

D'autres particularités et avantages de l'invention ressortiront à la lecture de la description faite ci-après, à titre indicatif mais non limitatif, en référence aux dessins annexés sur lesquels : - la figure 1 est un schéma général d'un réseau de communication auquel l'accès est réalisé conformément à l'invention,

- la figure 2 est un schéma général d'une station insérée dans le réseau de la figure 1,

- la figure 3 illustre un mode de réalisation d'un circuit d'interface MIC faisant partie de la station montrée sur la figure 2, et

- la figure 4 illustre un mode de réalisation d'un circuit d'interface de terminal faisant partie de la station montrée sur la figure 2.

Tel que représenté sur la figure 1, le réseau comprend un support de transmission constitué par des liaisons sous forme de canaux MIC bidirectionnels qui relient entre elles des stations S1, S2, ....., S(n-1), Sn, S(n + 1), ....., Sp. Les références MIC(n-1)-n et MICn(n + 1) désignent les canaux MIC raccordant respectivement la station S(n-1) à la station Sn et la station Sn à la station S(n + 1).

Sur chaque liaison, les canaux MIC sont par exemple au nombre de 4 avec un débit de 2048 kb/s. Ils supportent chacun un multiplex temporel pouvant acheminer, dans des trames, des données asynchrones (paquets), des données synchrones (parole numérisée) et de la signalisation.

Un canal de communication pour les données et la signalisation passant par toutes les stations est établi en empruntant successivement les canaux MIC dans un sens de propagation, le retour à la station initiale pour rebouclage s'effectuant en utilisant l'autre sens de propagation sur les mêmes canaux MIC, ou un autre trajet. Puisque, dans l'exemple considéré, une liaison entre deux stations est formée de 4 canaux MIC bidirectionnels, il est possible de définir 4 canaux de communication bouclés qui passent par toutes les stations, sans nécessairement avoir la même topologie.

Chacune des stations comprend un bus local BL1, BL2, ..., BLn, ..., BLp sur lequel sont raccordés plusieurs terminaux de transmission de données ou terminaux de traitement de la parole. Ainsi, des terminaux T1-1, T1-2, ..., T1-n$_1$ sont raccordés au bus BL1, des terminaux T2-1, T2-2, ..., T2-n$_2$ sont raccordés au bus BL2, des terminaux Tn-1, Tn-2, ..., Tn-n$_n$ sont raccordés au bus BLn et des terminaux Tp-1, Tp-2, ..., Tp-n$_p$ sont raccordés au bus BLp.

A chaque canal de communication en forme de boucle qui parcourt l'ensemble des stations est associé un premier jeton, ou jeton d'accès, qui circule en concomitance avec les données et/ou la signalisation véhiculée. Le jeton d'accès est véhiculé par le canal de communication auquel il est associé. Il est aussi possible de faire circuler les 4 jetons sur un même canal de communication, et éventuellement sur au moins un autre, à titre de redondance, ou de les répartir sur 2 canaux.

La station qui capte le jeton d'accès associé à un canal de communication est la seule autorisée à émettre sur celui-ci. La station conserve le jeton d'accès aussi longtemps qu'elle émet des données ou de la signalisation sur le canal de communication correspondant. En fin d'émission, elle libère le jeton d'accès qui se propage alors sur son canal de communication, dans le même sens que le sens de propagation des données ou de la signalisation sur le canal de communication associé au jeton d'accès, et avec la même vitesse.

Les terminaux de transmission de données raccordés à un même bus local peuvent transmettre sur ce bus local selon un protocole à contention de type CSMA/CA, CSMA/CR, CSMA/CD, ou analogue, afin d'éviter les collisions sur le bus ou les résoudre. Chaque message émis sur le bus local par un terminal est ainsi disponible à l'entrée de tous les terminaux raccordés sur ce même bus local. Il est à noter qu'un protocole autorisant les collisions, tel que CSMA/CD n'apporte pas de gêne excessive puisque le nombre d'émetteurs potentiels sur le bus est limité au nombre de terminaux rattachés à la station ayant capté le jeton d'accès, et que la probabilité d'émission quasi-simultanée est faible, du fait du faible temps de parcours sur le bus. Il est également à noter que le protocole CSMA/CR peut être ici utilisé à grande vitesse de modulation puisque la contention n'a lieu que sur le bus local, de longueur limitée, et que la longueur des liaisons entre stations n'intervient pas, ce qui n'est pas le cas dans une structure de réseau simple en bus où il faut attendre qu'un bit se soit propagé d'un bout à l'autre du bus avant d'émettre le suivant.

Comme les liaisons entre stations, chaque bus local est constitué d'un multiplex temporel de 4 canaux MIC bidirectionnels. Avantageusement, le bus local n'est validé en écriture sur un ou plusieurs canaux MIC que durant le temps où la station conserve le ou les jetons d'accès associé au canal ou aux canaux de communication correspondant à ce ou ces canaux MIC du bus local. Ainsi, pour un canal de communication considéré, lorsque le jeton d'accès associé n'a pas été capté par une station, le canal MIC correspondant du bus local est placé par la station dans un état non disponible en écriture vers le bus.

Dès qu'un terminal désire émettre des données ou de la signalisation, il adresse à la station à laquelle il est rattaché un signal de demande pour émettre. La station capte alors le premier jeton d'accès qui passe et valide le bus local en écriture pour le canal MIC de ce bus qui correspond au canal de communication associé au jeton d'accès capté. Le terminal demandeur peut alors émettre son message, par exemple des données sous forme de trames, sur ce canal MIC du bus local selon la procédure de contention CSMA/CA, CSMA/CR, CSMA/CD ou analogue choisie. Les données émises par le terminal sont transmises sur le canal de communication correspondant au jeton d'accès capté et, dans chacune des autres stations, ces données sont dérivées sur le bus local pour être présentées en lecture aux divers terminaux qui y sont rattachés. Ainsi les mêmes données sont présentées à tous les terminaux raccordés au réseau sans nécessiter de stockage intermédiaire. Le canal de communication est ouvert par interruption de la ré-émission des données du canal MIC entrant dans la station émettrice, dans le sens de propagation des données, afin d'empêcher les données d'être émises une deuxième fois par cette station.

Lorsque le terminal émetteur a terminé son émission, le canal MIC du bus local correspondant devient disponible pour tout autre terminal, rattaché à la même station et qui lui aurait adressé un signal de demande pour émettre. Lorsque toutes les demandes pour émettre locales adressées à la station ont été satisfaites, ou lorsqu'un temps maximum alloué de rétention du jeton d'accès est dépassé, le jeton est libéré, rendant disponible le canal de communication associé. En même temps, un deuxième jeton est émis par la station immédiatement derrière les données qui viennent d'être émises. Ce deuxième jeton, ou jeton de rebouclage, suit ces données jusqu'à la station émettrice. Cette dernière est ainsi renseignée du fait que toutes les données qu'elle a émises sont arrivées à destination et qu'elle peut, à son niveau, refermer le canal de communication.

En variante, le jeton de rebouclage est émis par une station située en aval de la station émettrice, par exemple par la nouvelle station captant le jeton d'accès qui vient d'être libéré, juste avant l'émission par cette nouvelle station sur le canal de communication correspondant. Toute autre solution aboutissant à une réception du jeton de rebouclage dans la station émettrice initiale, avant l'arrivée de données issues d'une station aval, est évidemment possible.

Le jeton de rebouclage peut être émis sur le canal de communication correspondant ou sur un autre canal, par exemple un canal acheminant la signalisation, dans la mesure où ce canal n'a pas un trajet supérieur à celui des données.

Le fait de disposer de plusieurs canaux MIC bidirectionnels dans chaque liaison entre stations, 4 canaux dans l'exemple considéré, permet, comme déjà indiqué, de disposer de 4 canaux de communication en forme de boucles, relativement indépendants.

Ainsi, dans le cas d'une collision entre plusieurs terminaux sur un bus local, l'un des terminaux ayant perdu la contention pourra émettre si un jeton d'accès sur un autre canal de communication se présente. Il en est de même pour des terminaux rattachés à des stations différentes : le fait qu'une station ait capté le jeton d'accès à un canal de communication ne bloque pas l'émission des autres stations sur d'autres canaux de communication. Ceci assure donc une diminution du temps d'attente moyen. Il est aussi possible de particulariser les canaux de communication, certains n'autorisant par exemple qu'une rétention du jeton d'accès à temps limité, de façon à minimiser le temps maximal d'attente.

Le fait de disposer de 4 canaux de communication pouvant avoir des topologies différentes permet aussi, dans le cas d'émission point à point, de sélectionner le jeton d'accès au canal de communication par lequel le trajet vers le destinataire est le plus court, ce qui minimise le temps d'inutilisation du jeton d'accès.

Par ailleurs, la disponibilité de plusieurs jetons d'accès diminue le risque de panne totale du réseau en cas de perte d'un jeton.

Enfin, il est possible de spécialiser les canaux de communication, chacun traitant un nombre limité de types de transmission : paquets ou circuits, et de n'autoriser la connexion à un canal de communication que pour les terminaux correspondant à un type de transmission auquel le canal est destiné. Dans le même ordre d'idée, les signalisations relatives aux 4 canaux de communication peuvent être acheminées dans un canal unique, ainsi, éventuellement, que dans au moins un autre canal, à titre de redondance, plutôt que de faire passer dans chaque canal la signalisation relative à ce canal.

Comme déjà indiqué, les données et/ou la signalisation acheminées par les 4 canaux de communication sont, dans chaque station, dérivées sur le bus local de celle-ci pour être accessibles aux terminaux de transmission de données rattachés à la station, le bus local étant alors un bus haute vitesse supportant un multiplex temporel de 4 canaux MIC bidirectionnels et fonctionnant, dans l'exemple considéré à 4 x 2048 kbits/s. Les bits des 4 canaux de communication sont entrelacés sur le bus local, un brassage pouvant être effectué par la station entre les 4 canaux de communication et les 4 canaux MIC du bus local.

Toutefois, dans le cas où les composants assurant l'interface entre les terminaux et le bus local ne sont pas capables de fonctionner à 4 x 2048 kb/s et de travailler sur 1 bit tous les 4 bits, il est nécessaire :
- soit, en conservant le bus local haute vitesse, de disposer un multiplexeur entre les sortie d'émission des terminaux et le bus local, et un démultiplexeur entre le bus local et les entrées de réception des terminaux,
- soit de séparer physiquement le bus local en plusieurs bus élémentaires bidirectionnels, par exemple 4 bus bidirectionnels à 2048 kb/s, en interposant un multiplexeur entre les bus élémentaires formant le bus local et la liaison supportant les canaux de communication et traversant la station, et un démultiplexeur entre la liaison traversant la station et les bus élémentaires formant le bus local.

Une description plus détaillée d'un mode de réalisation d'une station Sn sera maintenant donnée dans le cadre de l'application de l'invention à un ISPBX (Integrated Service Private Branch eXchange = autocommutateur privé à intégration de services) à architecture décentralisée.

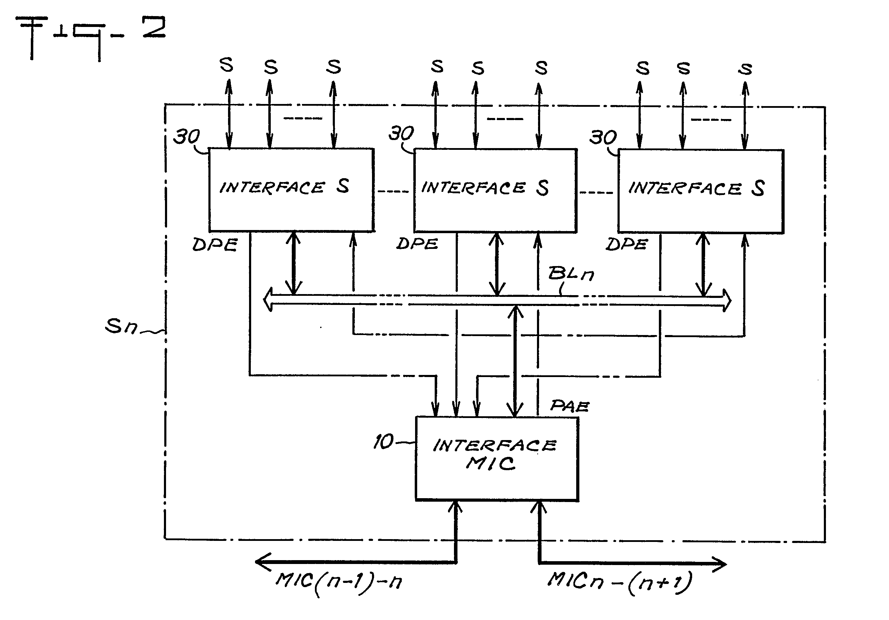

Un circuit 10 d'interface MIC (figure 2) est branché sur les canaux MIC(n-1)-n et MICn-(n + 1) et est relié au bus local MIC pour former interface entre canaux MIC externes et canaux MIC du bus local. Les terminaux de transmission de données et, éventuellement, de traitement de parole desservis par la station Sn sont reliés localement à celle-ci par des liaisons à l'interface S (telle que définie par l'avis I430 du CCITT). Les terminaux à l'interface S sont raccordés sur des circuits 30 d'interface S qui gèrent cette interface et sont eux-mêmes raccordés au bus local BLn. En outre, le circuit 10 d'interface MIC reçoit des signaux DPE (demande pour émettre) provenant des terminaux vie les circuits 30 d'interface S, lorsque les terminaux désirent émettre, et produit des signaux PAE (prêt à émettre) appliqués aux circuits 30 d'interface S pour autoriser l'émission par le terminal demandeur en suivant la procédure CSMA/CA, CSMA/CR ou CSMA/CD. Des échanges entre les circuits 30 d'interface S et le circuit 10 d'interface MIC s'effectuent par le bus local BLn.

Chacune des liaisons à l'interface S raccordant les terminaux à la station Sn est susceptible d'acheminer, dans les deux sens, entre le terminal correspondant et la station, de la parole, des données et de la signalisation.

On considère ci-après, à titre d'exemple, l'acheminement de le signalisation. Celle-ci est transmise sous forme de trames normalisées HDLC (initiales de High level Data Link Control).

Dans la trame globale, ou supertrame, acheminée par un canal de communication, l'intervalle de temps n° 16, ou IT16 est réservé pour acheminer les trames de signalisation entre stations. De même, l'IT16 d'un des canaux MIC du bus local BLn est réservé à l'échange des signalisations entre circuits 30 d'interface S et circuit 10 d'interface MIC.

Le canal de signalisation véhicule la signalisation servant à gérer les voies en mode circuit dans le canal de communication ainsi que la signalisation associée à chaque paquet. Cette dernière peut également passer dans le canal de données, en des positions déterminées ou selon des codes spécifiques.

Lorsqu'un terminal désire émettre une trame de signalisation, le circuit d'interface S associé émet un signal DPE à l'attention du circuit 10 d'interface MIC. Ce dernier capte le premier jeton d'accès provenant des canaux de communication MIC dès qu'il arrive et émet un signal PAE destiné à l'ensemble des circuits 30 d'interface S. Corrélativement, la connexion de IT16 normalement établie entre les canaux MIC(n-1)-n et MICn-(n + 1) est temporairement interrompue, dans le sens de propagation du jeton capté, pour y substituer l'IT16 du canal MIC concerné du bus local. Le circuit d'interface S correspondant au terminal demandeur peut alors émettre sa trame de signalisation qui sera transmise sur tout le canal de communication pour être présentée sur les bus locaux de toutes les stations raccordées à ce canal de communication.

Au cas où des demandes pour émettre sont produites par plusieurs circuits 30 d'interface S d'une même station, une procédure CSMA/CA, CSMA/CR ou CSMA/CD établie sur l'IT16 de le liaison MIC sur le bus local permet d'éviter ou de résoudre les collisions sans perte de temps excessive et de transmettre successivement les trames de signalisation.

Lorsqu'il ne subsiste plus de demande pour émettre à satisfaire, le circuit 10 d'interface MIC libère le jeton d'accès pour le renvoyer sur le canal de communication MIC externe en même temps qu'il émet un jeton de rebouclage qui, lorsqu'il revient au circuit émetteur 10, rétablit la connexion de l'IT16 entre les tronçons MIC(n-1)-n et MICn-(n + 1) dans le sens de propagation.

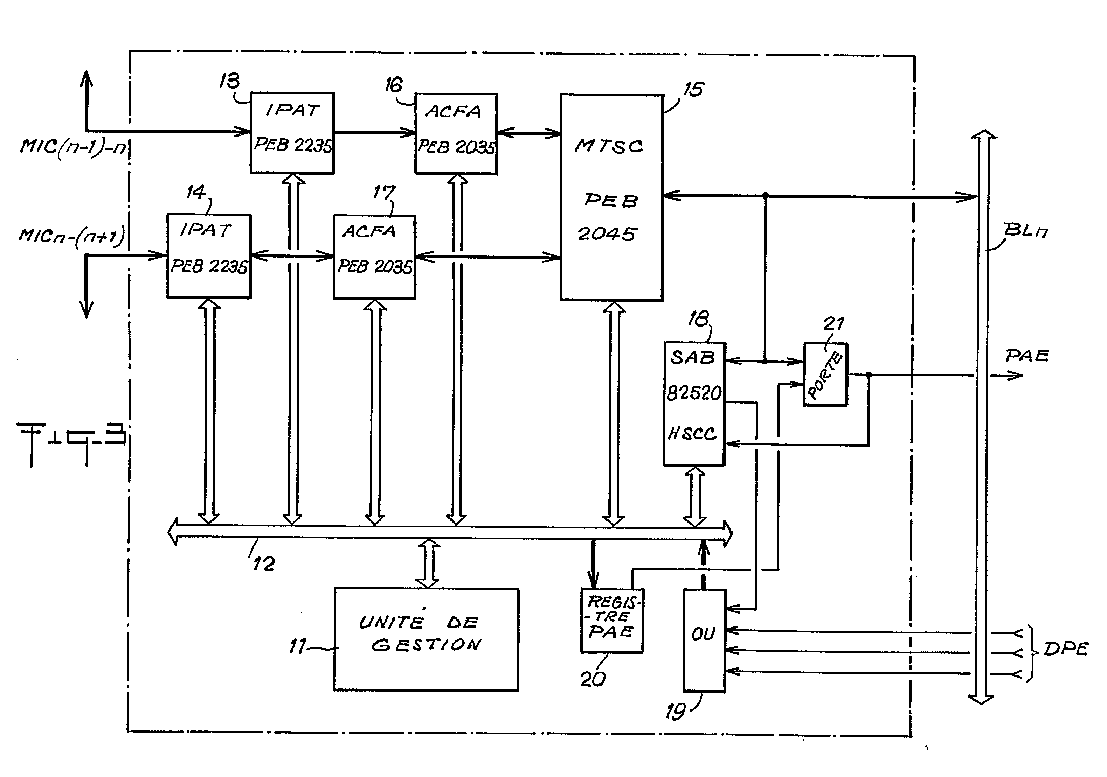

Un mode particulier de réalisation du circuit 10 d'interface MIC est représenté sur la figure 3.

Une unité de gestion 11 utilisant par exemple un microprocesseur "80188", de la société des Etats-Unis d'Amérique Intel, commande l'enchaînement des différents processus accomplis par les composants actifs du circuit 10 qui sont connectés sur le bus 12 de l'unité à microprocesseur 11.

L'adaptation du circuit d'interface MIC aux canaux MIC externes MIC(n-1)-n et MICn-(n + 1) est réalisée respectivement au moyen de deux circuits 13, 14. Ces derniers sont reliés à une matrice de connexion 15 par l'intermédiaire, respectivement, de deux circuits 16, 17 qui assurent la gestion des trames MIC et leur adaptation à la matrice de connexion. Celle-ci permet, sous la commande de l'unité de gestion 11, toutes les combinaisons possibles de connexion entre les différents IT du canal de communication MIC externe et du canal MIC du bus local auquel la matrice de connexion est également reliée. Un circuit 18 est chargé de l'échange des trames de signalisation entre l'IT16 du canal MIC du bus local et l'unité de gestion 11.

Les circuits 13 à 18 sont constitués par exemple par des composants produits par la société de la République Fédérale d'Allemagne Siemens. Ainsi, les circuits d'adaptation 13 et 14 sont du type "IPAT-PEB 2235", les circuits 16, 17 de gestions de trames MIC sont du type "ACFA PEB 2035", la matrice de connexion est du type "PEB 2045" et le circuit 18 est du type "SAB 82520 HSCC".

Lorsque le circuit 18 désire transmettre une signalisation, il produit un signal DPE vers une porte 19 assurant la fonction logique OU. La porte 19 reçoit en outre les signaux DPE provenant des circuits d'interface S, à la requête des terminaux raccordés à la station.

La sortie de la porte OU est prise en compte par l'unité de gestion 11 pour commander le prélèvement du jeton d'accès dès son prochain passage, en réponse à l'apparition d'un signal DPE. Ce jeton se présente par exemple sous la forme d'un bit transmis dans l'intervalle de temps n° 0 (IT0) sur le canal de communication MIC externe.

Lorsque le jeton d'accès a été capté, l'unité de gestion 11 fait passer à l'état haut le contenu d'un registre 20 dont la sortie est reliée à une entrée d'une porte 21 assurant la fonction ET. Le passage à travers la porte 21 est autorisé lorsque l'IT16 du canal MIC du bus local est validée. L'autorisation de transmission en sortie du registre 20 constitue, après passage à travers la porte 21, le signal prêt à émettre PAE qui est appliqué au circuit 18. Le signal PAE est également appliqué en parallèle aux circuits 30 d'interface S. En même temps, l'unité de gestion 11 envoie un ordre à la matrice de connexion 15 pour couper localement la transmission de l'IT16 du canal de communication externe, dans le sens de propagation, afin d'empêcher le rebouclage de la signalisation qui aurait parcouru une première fois la boucle formée par ce canal externe.

Lorsque toutes les demandes DPE auront été satisfaites, la retombée de la sortie de la porte 19 commande, par l'intermédiaire de l'unité de gestion 11, la ré-émission du jeton d'accès sur le canal de communication MIC externe et l'émission du jeton de rebouclage dont le retour signalera à l'unité de gestion 11 qu'elle doit donner à la matrice de connexion 15 l'ordre de refermer localement l'IT16 précédemment coupé. Le jeton de rebouclage peut également se présenter sous la forme d'un bit transmis dans l'IT0.

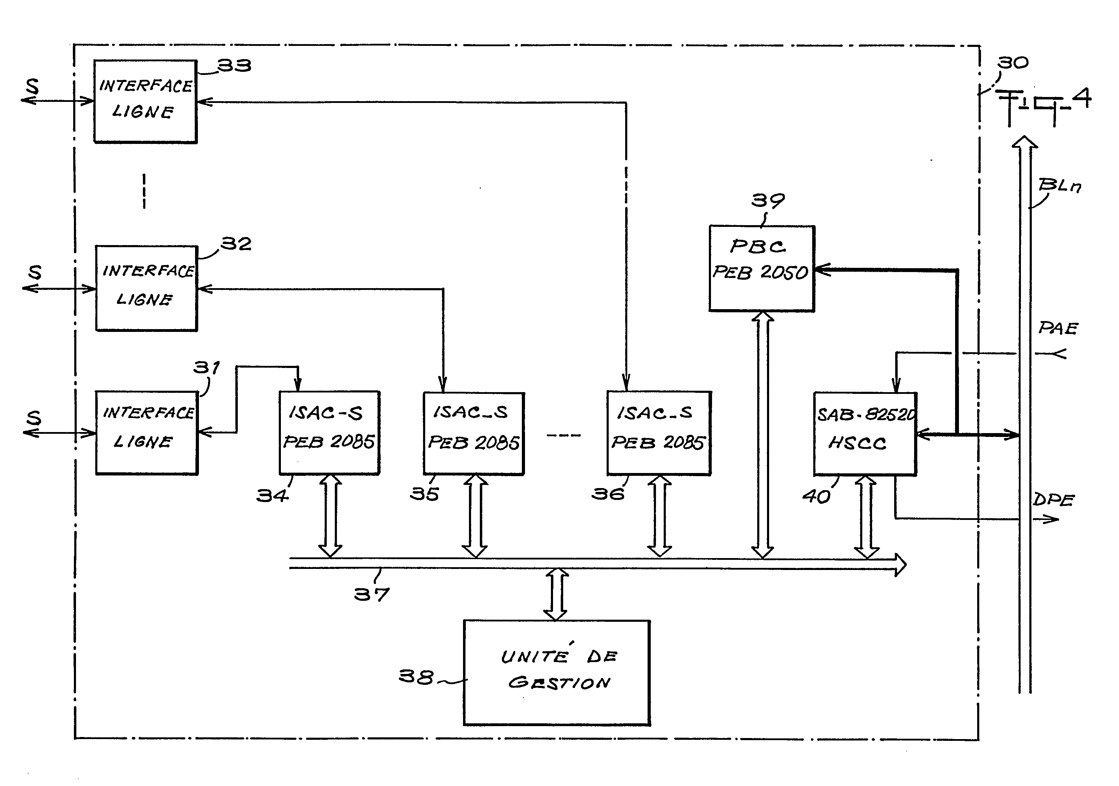

Un mode particulier de réalisation d'un circuit 30 d'interface S est représenté sur la figure 4.

Le circuit 30 représenté permet de raccorder plusieurs terminaux (trois dans l'exemple illustré) sur des interfaces S connectées à des interfaces de ligne 31, 32, 33. Chacune de ces dernières est destinée à adapter les signaux logiques à un circuit respectif 34, 35, 36, chargé de la gestion locale de cette interface et raccordé au bus 37 d'une unité de gestion locale à microprocesseur 38.

Les circuits de gestion d'interface 34, 35, 36 sont reliés par ailleurs à un circuit 39 chargé d'assurer les connexions des canaux B sur le canal MIC du bus local BLn auquel il est connecté. On sait que l'interface suivant le protocole S est caractérisée par 2 canaux, dits canaux B, à 64 kb/s occupant 2 x 8 bits dans la trame, un canal de signalisation, ou canal D, (sémaphore) à 16 kb/s qui occupe 2 bits dans la trame, la relecture du bus de signalisation (procédure CSMA/CR) à 16 kb/s qui occupe 2 bits et le contrôle de parité qui occupe 4 bits. Dans l'exemple d'application considéré, on s'intéresse à la signalisation. Les 2 bits de signalisation sont lus cycliquement dans les trames successives pour être mis sous forme d'un message au format HDLC. Les trames de signalisation, échangées sur les canaux D des différents terminaux, transitent par le bus 37 de l'unité de gestion 38 et par un circuit 40 relié au canal MIC du bus local pour circuler dans l'IT16 de ce canal MIC local selon le processus décrit plus haut. A cet effet, le circuit 40 émet un signal DPE vers la porte 19 du circuit d'interface MIC en réponse à une demande de transmission provenant d'un canal et interprétée par l'unité de gestion 38, et le circuit 41 reçoit le signal PAE.

Les circuits 34, 35, 36 sont par exemple constitués par des composants de type "ISAC-S PEB 2085" de la société Siemens précitée tandis que les circuits 39 et 40 sont par exemple constitués respectivement par les composants "PBC-PEB 2050" et "SAB-82520 HSCC" de la même société.

Bien entendu, les procédures décrites ci-avant pour acheminer la signalisation peuvent être utilisées pour transmettre des données dans des trames. En cas de transmission de données, des intervalles de temps autres que l'IT16 peuvent être utilisés. Il est également possible, afin d'obtenir un débit plus important, de faire supporter cette liaison de données par plusieurs canaux B ayant accès au circuit 30.

L'exemple donné ci-dessus de canaux portés par des trames synchrones MIC n'est pas limitatif. En particulier, il est possible d'utiliser des trames synchrones telles que FDDI, ou autres, ainsi que des trames asynchrones.

La nature physique du support de transmission peut être variée, telle que paire torsadée, câble coaxial, fibre optique, etc ... Le couplage entre les canaux de communication externes et les bus locaux peuvent être réalisés de façon analogique au moyen par exemple de coupleurs de coaxial, de coupleurs optiques commandés, etc ...

Dans chaque station, le bus local, de taille limitée, peut être d'une autre technologie et fonctionner à vitesse plus élevée que les liaisons entre stations, ce qui permet notamment des échanges locaux entre terminaux rattachés à la station, en plus du trafic échangé avec les canaux MIC externes.

**Revendications**

1. Procédé d'accès à un réseau de communication étendu comportant des stations auxquelles sont rattachés des terminaux de transmission de données et qui sont reliées par des liaisons selon une topologie quelconque, les liaisons véhiculant au moins un premier jeton, ou jeton d'accès, qui, lorsqu'il est capté par une station, autorise cette dernière à offrir à ses terminaux d'accéder en émission sur une liaison relative à ce jeton à laquelle la station est raccordée, caractérisé en ce que :
- les liaisons définissent au moins une boucle virtuelle formant au moins un canal de communication passant par toutes les stations et véhiculant des trames qui transportent au moins un jeton, de la signalisation et des données,
- les terminaux rattachés à une station qui a capté le jeton d'accès au canal de communication peuvent accéder à celui-ci par l'intermédiaire d'un bus local commun propre à la station sur lequel l'accès en écriture par les terminaux est régi par un protocole à contention, et
- la station ayant capté le jeton d'accès en émission sur le canal de communication en réponse à une demande d'accès provenant d'un ou plusieurs terminaux rattachés à la station, ré-émet le jeton d'accès sur le canal de communication après que le ou les terminaux demandeurs aient émis successivement leurs messages respectifs via le bus local.

2. Procédé selon la revendication 1, caractérisé en ce que dans chaque station autre que celle ayant capté le jeton d'accès au canal de communication, la signalisation et/ou les données circulant sur celui-ci sont dérivées sur le bus local pour être accessibles en lecture par les terminaux rattachés à la station.

3. Procédé selon l'une quelconque des revendications 1 et 2, caractérisé en ce que la boucle formant le canal de communication est ouverte dans la station ayant capté le jeton d'accès à celui-ci, au début de l'émission sur ce canal.

4. Procédé selon la revendication 3, caractérisé en ce qu'un deuxième jeton, ou jeton de rebouclage, est émis sur le canal de communication en fin d'émission sur celui-ci par une station, pour commander la fermeture de la boucle dans cette station lorsqu'il est reçu par celle-ci.

5. Procédé selon l'une quelconque des revendications 1 à 4, caractérisé en ce que dans chaque station l'accès en écriture sur le bus local est régi par un protocole de contention de type CSMA.

6. Procédé selon l'une quelconque des revendications 1 à 5, caractérisé en ce que les liaisons définissent plusieurs boucles virtuelles portant plusieurs canaux de communication passant chacun par toutes les stations et ayant chacun un jeton d'accès en émission.

7. Procédé selon la revendication 6, caractérisé en ce que les jetons relatifs aux différents canaux sont transmis dans un canal unique ou dans un nombre limité d'entre eux.

8. Procédé selon l'une quelconque des revendications 6 et 7, caractérisé en ce que la signalisation relative aux différents canaux est transmise dans un canal unique ou dans un nombre limité d'entre eux.

9. Procédé selon l'une quelconque des revendications 6 à 8, caractérisé en ce que le bus local de chaque station porte plusieurs canaux, et un brassage est effectué dans la station entre l'ensemble des canaux formés par les liaisons et l'ensemble des canaux du bus local.

10. Procédé selon l'une quelconque des revendications 6 à 9, caractérisé en ce que les boucles virtuelles formant les différents canaux ont des topologies différentes.

11. Procédé selon l'une quelconque des revendications 1 à 10, caractérisé en ce que, dans chaque station, un changement de vitesse de modulation est réalisé entre les terminaux de transmission de données et le bus local sous forme d'un multiplexage, ou démultiplexage, temporel allant de la sortie d'émission des terminaux vers le bus local, ainsi que d'un démultiplexage, ou multiplexage, temporel allant du bus local vers l'entrée de réception des terminaux.

12. Procédé selon l'une quelconque des revendications 1 à 11, caractérisé en ce que, dans chaque station, un changement de vitesse de modulation est effectué entre le ou chaque canal de communication passant par la station et le bus local.

13. Procédé selon l'une quelconque des revendications 1 à 12, caractérisé en ce que la signalisation et les données sont transmises sur des canaux de communication distincts, le canal de signalisation véhiculant un troisième jeton qui, lorsqu'il est capté par une station, autorise celle-ci à accéder au canal de signalisation en émission et qui est distinct du jeton d'accès véhiculé par le canal de données.

14. Procédé selon l'une quelconque des revendications 1 à 13, caractérisé en ce que le ou chaque canal de communication véhicule des trames synchrones de type MIC.

15. Procédé selon l'une quelconque des revendications 1 à 13, caractérisé en ce que le ou chaque canal de communication véhicule des trames synchrones de type FDDI.

16. Procédé selon l'une quelconque des revendications 1 à 13, caractérisé en ce que le ou chaque canal de communication véhicule les signaux conformément au mode A.T.M.

17. Dispositif d'accès à un réseau de communication étendu comportant des stations (S1, ..., Sn, ..., Sp) auxquelles sont rattachés des terminaux de transmission de données (T1-1 à T1-$n_1$, ..., Tn-1 à Tn-$n_n$, ..., Tp-1 à Tp-$n_p$) et qui sont reliées par des liaisons (MIC1-2, ..., MIC(n-1)-n, MICn-(n + 1), ..., MICp-1) selon une topologie quelconque, les liaisons véhiculant au moins un premier jeton, ou jeton d'accès, qui, lorsqu'il est capté par une station, autorise un terminal rattaché à cette station à accéder en émission sur une liaison à laquelle la station est raccordée, caractérisé en ce que :

- les liaisons (MIC1-2, ..., MIC(n-1)-n, MICn(n + 1), ..., MICp-1) définissent au moins une boucle virtuelle formant au moins un canal de communication passant par toutes les stations (S1, ..., Sn, ..., Sp) et véhiculant des trames qui transportent au moins un jeton, de la signalisation et des données,

- chaque station comporte un bus local propre (BL1, ..., BLn, ..., BLp) auquel l'accès en écriture par les terminaux de transmission de données (T1-1 à T1-$n_1$, ..., Tn-1 à Tn-$n_n$, ..., Tp-1 à Tp-$n_p$) est régi par un protocole de contention, l'accès d'un terminal en émission sur le canal de communication étant réalisé via le bus local, et

- chaque station comprend des moyens pour capter le jeton d'accès en émission sur le canal de communication en réponse à une demande d'accès provenant d'un ou plusieurs terminaux rattachés à la station, et des moyens pour ré-émettre le jeton d'accès sur le canal de communication après que le ou les terminaux demandeurs aient émis successivement leurs messages respectifs via le bus local.

18. Dispositif selon la revendication 17, caractérisé en ce que chaque station (S1, ..., Sn, ..., Sp) comporte un circuit d'interface de liaison (10) interposé entre les liaisons auxquelles la station est reliée et le bus local (BL1, ..., BLn, ..., BLp) de la station, le circuit d'interface de liaison permettant la dérivation sur le bus local de la signalisation et/ou des données véhiculées par le canal de communication, lorsque la station n'émet pas sur celui-ci, et le circuit d'interface de liaison commandant l'ouverture, au niveau de la station, de la boucle formant le canal de communication lorsque la station émet sur celui-ci.

19. Dispositif selon la revendication 18, caractérisé en ce que le circuit d'interface de liaison (10) comprend en outre des moyens pour commander la fermeture, au niveau de la station, de la boucle formant le canal de communication en réponse à la détection d'un jeton de rebouclage relatif à ce canal de communication.

20. Dispositif selon l'une quelconque des revendications 17 à 19, caractérisé en ce que les liaisons définissent plusieurs boucles virtuelles formant plusieurs canaux de communication.

21. Dispositif selon la revendication 20, caractérisé en ce que les boucles virtuelles formant les différents canaux de communication ont des topologies différentes.

22. Dispositif selon l'une quelconque des revendications 17 à 21, caractérisé en ce que chaque station comprend des circuits d'interface de terminal interposés entre les terminaux de transmission de données rattachés à la station et le bus local.

23. Dispositif selon la revendication 22, caractérisé en ce que, dans chaque station, des moyens de multiplexage/démultiplexage temporel sont interposés entre le bus local et les circuits d'interface de terminal afin de réaliser un changement de vitesse de modulation entre le bus local et les terminaux de transmission de données rattachés à la station.

24. Dispositif selon l'une quelconque des revendications 17 à 23, caractérisé en ce que chaque station comporte des moyens pour effectuer un changement de vitesse de modulation entre le ou chaque canal de communication passant par la station et le bus local.

Fig-1

EP 0 384 847 A1

Fig. 2

EP 0 384 847 A1

FIG-3

EP 0 384 847 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PHOENIX CONFERENCE ON COMPUTERS AND COMMUNICATIONS, Scottsdale, Arizona, 26-28 mars 1986, pages 314-320, IEEE, New York, US; K.K. RAMAKRISHNAN et al.: "Performance of an extended local area network for image applications" * Page 314, colonne de gauche, lignes 4-9; page 314, colonne de gauche, lignes 45-46; figure 1 * --- | 1,5,15 | H 04 L 12/42 H 04 L 12/40 |
| A | IDEM --- | 2,17 | |
| X | ELECTRONIC DESIGN INTERNATIONAL, vol. 35, no. 22, 17 septembre 1987, pages 45-48,50, Hasbrouck Heights, NJ, US; N. MOKHOFF: "Five-chip token-passing set operates LANS et 100 Mbit/s" * Page 45, colonne de gauche, lignes 14-23; figure 1 * --- | 1-3,5, 15 | |
| A | IDEM --- | 14,16, 17 | **DOMAINES TECHNIQUES RECHERCHES (Int. Cl.5)** |
| A | IEEE INFOCOM'88, PROCEEDINGS OF THE 7TH ANNUAL JOINT CONFERENCE OF THE IEEE COMPUTER AND COMMUNICATIONS SOCIETIES, New Orleans, Louisiana, 27-31 mars 1988, pages 45-54, IEEE, New York, US; L.A. BERGMAN et al.: "A fiber optic tactical voice/data network based on FDDI" * Page 48, colonne de gauche, lignes 8-17; page 49, colonne de gauche, lignes 17-31; page 51, lignes 8-18; figures 2,4 * --- -/- | 1,2,11, 12,15, 17,23, 24 | H 04 L |

Le présent rapport a été établi pour toutes les revendications

| Lieu de la recherche | Date d'achèvement de la recherche | Examinateur |
|---|---|---|
| LA HAYE | 22-05-1990 | DE LA FUENTE DEL AGUA P. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 602 365 (WHITE)<br>* Colonne 2, lignes 58-68; colonne 3, lignes 25-31; figures 2,5 *<br>--- | 1,2,6,9,10,17,20,21 | |
| A | EP-A-0 156 580 (HONEYWELL)<br>* Page 3, lignes 1-16; page 5, lignes 3-10; figure 1 *<br>----- | 1,2,6-10,17 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 22-05-1990 | DE LA FUENTE DEL AGUA P. |